# EUROPÄISCHE PATENTSCHRIFT

(11) **EP 1 846 489 B1**
(45) Veröffentlichungstag und Bekanntmachung des Hinweises auf die Patenterteilung: **16.07.2008**
(21) Anmeldenummer: 06708077.0
(22) Anmeldetag: 07.02.2006
(51) Int. Cl.: C08K 3/22, B32B 17/10

(54) **BESCHLEUNIGTE UV-AUSHÄRTUNG**
ACCELERATED UV CURING
DURCISSAGE PAR UV ACCELERE

(30) Priorität: 09.02.2005 DE 102005005976
(43) Veröffentlichungstag der Anmeldung: 24.10.2007
(73) Patentinhaber: Air Products and Chemicals, Inc., Allentown, PA 18195-1501 (US)
(72) Erfinder: BURGARD, Detlef, 66333 Völklingen (DE)
(74) Vertreter: Jönsson, Hans-Peter
(86) Internationale Anmeldenummer: PCT/EP2006/050730
(87) Internationale Veröffentlichungsnummer: WO 2006/084848

(56) Entgegenhaltungen:
- EP-A- 0 281 365
- WO-A-02/060988
- DE-A1- 10 327 919
- DE-B4- 4 447 726
- US-A- 5 925 453
- US-B1- 6 191 884
- CHOWDHURY P ET AL: "THE CROSS-LINKING OF ACRYLIC RUBBER IN THE PRESENCE OF GROUP IIB METAL OXIDES" JOURNAL OF APPLIED POLYMER SCIENCE, JOHN WILEY AND SONS INC. NEW YORK, US, Bd. 52, Nr. 9, 31. Mai 1994 (1994-05-31), Seiten 1233-1240, XP000464285 ISSN: 0021-8995

## Beschreibung

Die vorliegende Erfindung betrifft die Verwendung von IR-Absorbern zur Beschleunigung der UV-Aushärtung von auszuhärtenden Massen.

Verbundscheiben sind per se bekannt. Sie bestehen in der Regel aus zwei beabstandeten Scheiben, die über eine dazwischen liegende Masse fest miteinander verbunden sind, um etwa eine leichte, bruchfeste Anordnung vorzusehen. Dabei werden bereits etwa im Waggonbau Verbundscheiben hergestellt, indem Gießharz zwischen zwei Scheiben, die aus Flachglas (Floatglas) und/oder Kunststoff bestehen können, gegossen wird. Das Gießharz wird dann durch UV-Bestrahlung ausgehärtet, was den Verbund bewirkt.

Um eine gründliche Aushärtung zu erzielen, sind sehr starke UV-Strahler und unerwünscht lange Bestrahlungszeiten erforderlich. Dies erhöht die Kosten von Verbundscheibenanordnungen und beschränkt somit die Verwendbarkeit. Gleiches gilt auch für andere Anwendungen außer der Verbundscheibenherstellung, bei welchen Massen durch UV-Einstrahlung verändert werden.

UV-härtende, transparente Lack- und Harzsysteme erfreuen sich einer großen Beliebtheit, da meist keine Lösemittel notwendig sind, kürzere Trocknungs-/Härtungszeiten erzielt werden können und die Anlagentechnik öft günstiger ist.

Die Vernetzung der Systeme wird in den bekannten Systemen über UV-Licht initiiert. UV-Lampen strahlen neben UV auch einen gewissen Anteil an IR-Strahlung ab (beispielsweise Metalldampflampen). Die IR-Strahlung wird bislang von den Phtoinitiatoren oder anderen bsilang eingesetzten photoaktiven Stoffen nicht gut absorbiert. UV-Strahlung wird in der Regel sogar nur vom Photoinitiator kurzzeitig absorbiert, der sich schnell zersetzt und anschließend nicht mehr absorbiert.

Die Aufgabe besteht darin, eine besonders schnelle UV-Aushärtung von Gießharzmassen zu erzielen, bei der während der gesamten Aushärtungsreaktion UV- und IR-Strahlung absorbiert werden kann und in Wärme umgewandelt werden kann.

Diese Aufgabe wird gelöst durch die Verwendung eines Infrarot-Absorbers gemäß Anspruch 1 zur Beschleunigung der UV-Aushärtung einer auszuhärtenden Masse.

Der eingesetzte Infrarot-Absorber ist vorteilhafterweise ein Pigment, das sowohl UV- als auch IR-Strahlung absorbiert, gleichzeitig aber vorzugsweise im sichtbaren Wellenlängenbereich des Lichts weitgehend transparent ist.

Da die reine Absorption vorzugsweise sehr hoch ist im UV- und IR- Bereich des Wellenlängenspektrums (beispielsweise mindestens 70% des einfallenden Lichts) kommt es zu einer Erwärmung der Gießharzmasse.

Gießharzmassen (oder auch allgemein Gießharze) sind im Sinne der Erfindung allgemein UV-vernetzbare Systeme, insbesondere auch Acrylatsysteme, und umfassen auch beispielsweise Lacke, insbesondere auf Acrylatbasis.

Für diesen Zweck sind also vorteilhafterweise Materialien geeignet, die ein entsprechendes Absorptionsverhalten haben. Diese Materialien können vorteilhafterweise einzeln oder als Gemisch vorliegen und ausgewählt sein aus anorganischen UV-Absorbern (beispielsweise ZnO) und IR-Absorbern (organisch oder anorganisch).

Dies ermöglicht beispielsweise ein Verfahren zur Verbundscheibenherstellung, bei welchem eine Ausgangsmasse zwischen Scheiben vorgesehen und zur Verbundbildung umgesetzt wird, wobei UV-Licht aus einer breitbandigen Energiequelle auf die Ausgangsmasse eingestrahlt wird und wobei die Ausgangsmasse vor UV-Einstrahlung mit einem IR-Absorber versehen wird, um in der Ausgangsmasse IR-Strahlung aus der breitbandigen Energiequelle bei der Umsetzung zu absorbieren und in der ausgehärteten Masse der Verbundscheibe Wärme zu absorbieren.

Wesentlich ist hierbei die Erkenntnis, dass die Aushärtung durch Vorhandensein beziehungsweise Beimengung schon einer sehr geringen Menge eines Infrarotabsorbers signifikant beschleunigt werden kann. Diese Erkenntnis beschränkt sich nicht auf die Verbundscheibenherstellung, bringt dort aber auch besondere Vorteile. Das Einbringen eines IR-Absorbers in eine auszuhärtende Masse reduziert dabei die Bestrahlungszeit bei gleichen Härteergebnissen signifikant, selbst obwohl die eigentliche Aushärtung nicht durch Erwärmen, sondern durch eine in einem anderen Bereich aktivierte Umsetzung erfolgt, was erhebliche Vorteile bezüglich der Anlagentechnik und der Fertigungszeiten bietet. Prozesstechnisch wird dabei ausgenützt, dass die typisch verwendeten Energiequellen zur UV-Lichtbestrahlung der Ausgangsmasse breitbandig arbeiten, wie dies im bevorzugten Fall etwa bei Metalldampflampen, insbesondere Quecksilberdampflampen der Fall ist, wodurch simultan UV und IR eingestrahlt wird.

Die Ausgangsmasse wird dabei typisch eine Masse mit einem UVempfindlichen Photoinitiator umfassen, die insbesondere per se eine bestimmte, nicht zu geringe Temperaturempfindlichkeit besitzt, also durch UV-Licht bei unterschiedlichen Temperaturen schneller und/oder anders die gewünschte Härtungsreaktion durchläuft. Besonders für Zwecke der Erfindung geeignete Massen bzw. Photoinitiatoren besitzen eine große Variation ihrer Empfindlichkeit mit der Temperatur.

Der IR-Absorber wird in einer bevorzugten Variante UV-beständig ausgelegt, um, anders als der im Verlauf der Aushärtung beziehungsweise Umsetzung der Ausgangsmasse typisch abgebaute Photoinitiator, über die gesamte Bestrahlungszeit aktiv zu sein. Dabei kann durch die aufgrund der IR-Absorption einstrahlungsbedingt im Reaktionsverlauf oftmals sogar signifikant und messbar ansteigende Temperatur der Ausgangsmasse beziehungsweise der reagierenden photoempfindlichen Bestandteile der Ausgangsmasse die Konzentrationsabnahme durch Abbau des Photoinitiators insoweit kompensiert werden, dass sich für die jeweils noch verbleibenden Mengen des Photoinitiators erhöhte Reaktionsgeschwindigkeiten ergeben. Die Erwärmung ist dabei bereits bei geringen Mengen geeigneter Absorber um so vieles schneller, dass sie zumindest in erheblichem Maße lokal auf die Ausgangsmasse beschränkt bleibt, was vorteilhaft ist, weil somit keine, jedenfalls keine signifikante Einkopplung von Wärme in zu verklebende, versiegelnde oder vergießende Gegenstände erfolgt, insbesondere, wenn diese wie die für Verbundscheiben verwendeten Scheiben typisch eine nur geringe Wärmeleitfähigkeit besitzen.

Es ist möglich, als Ausgangsmasse Gießharz, insbesondere solches auf Acrylbeziehungsweise Acrylatharzbasis zu verwenden, was insofern bevorzugt ist, als derartige Ausgangsmassen für ultraviolettes, sichtbares und infrarotes Licht hinreichend transparent sind oder gewählt werden können. In solchen Massen ist auch die bevorzugte Verwendung anorganischer Infrarotabsorber möglich, und zwar unter Verwendung insbesondere von Dispergierhilfsmitteln, die die bevorzugte, sehr gleichmäßige Verteilung von Teilchen erlauben, die eine nur geringe Größe besitzen, um so eine gleichmäßige Einkopplung von IR-Strahlung ermöglichen. Der Infrarotabsorber kann und wird also bevorzugt homogen verteilt beziehungsweise dispergiert werden.

Es handelt sich bei dem IR-Absorber um ein transparentes leitfähiges Oxid, das mit geeigneten Dispergiermitteln ausgerüstet ist, insbesondere um ATO, ITO, ZnO, aber auch LaB₆ und/oder um Mischungen aus und/oder mit diesen Substanzen und/oder solche gekapselten Substanzen und/oder Mischungen. Selbst bei größeren Konzentrationen derselben ist es möglich, das Dispergierhilfsmittel hierfür so zu wählen, dass der IR-Absorber bei der Reaktion in der Ausgangsmasse hinreichend fein verteilt bleibt, so dass er auch in der ausgehärteten Masse der Verbundglasscheibe Wärme absorbiert und damit neben der Beschleunigung der Härtungsreaktion und damit der Verbilligung der Erzeugnisse (beispielsweise Verbundscheibe) zugleich eine weitere, typisch gewünschte Eigenschaft zu vermitteln vermag. Der IR-Absorber wird typisch nanopartikulär sein, also Größen zwischen 10 nm bis in den µm-Bereich auf weisen, jeweils bezogen auf seine Einzelpartikel und/oder Agglomerate davon, und so eine gute Verteilbarkeit in der Gießharzmasse bzw. deren Vorstufen zu gewährleisten.

In geringeren Mengen hingegen zeigen gerade diese Materialien ideale Eigenschaften, um die gewünschte IR-Absorption während der Reaktion zu erzielen; die Mengen dieser Materialien können gering genug gehalten werden, um eine Beeinträchtigung eventuell vorhandener Oberflächen- oder Volumeneigenschaften, wie statische Aufladbarkeit, Transparenz für Funkwellen, insbesondere in GSM-Bändern und dergleichen vermeiden zu können.

Welche IR-Absorber, Ausgangsmassen und Dispergierhilfsmittel verwendet werden, ist dabei stark vom geplanten Einsatz der Scheiben oder anderen zu verbindenden, versiegelnden oder anderen zu verändernden Materialien usw. abhängig. Es ist aber einsichtig, dass erforderlichenfalls wechselnde Ausgangsmassen Systeme unterschiedlicher Dispergiermittel erforderlich machen können. In diesem Zusammenhang sei auch darauf hingewiesen, dass der Infrarotabsorber der vorliegenden Erfindung in typischen Systemen in beliebiger Reihenfolge mit dem Gießharz mischbar ist.

Acrylate sind aber vorzugsweise ausgewählt aus der Gruppe 1,4-Butandiol-- di(meth)acrylat, 1,6-Hexandiol-di(meth)acrylat, Neopentylglycol-di(meth)acrylat, Polyethylenglycol-di(meth)acrylat, Neopentylglycoladipat-di(meth)acrylat, Neopentylglycolhydroxypivalat-di(meth)acrylat, Dicyclopentanyl-di(meth)acrylat, Dicyclopentenyl-di(meth)acrylat modifiziert mit Caprolactam, Phosphorsäure-di(meth)acrylat modifiziert mit Ethylenoxid, Cyclohexyl-di(meth)acrylat modifiziert mit einer Allylgruppe, Isocyanurat-di(meth)acrylat, Trimethylolpropan-tri(meth)acrylat, Dipentaerythritol-tri(meth)acrylat, Dipentaerythritol-tri(meth)acrylat modifiziert mit Propionsäure, Pentaerythritol-tri(meth)acrylat, Trimethylolpropan-tri(meth)acrylat modifiziert mit Propylenoxid, Tris(acryloxyethyl)isocyanurat, Dipentaerythritolpenta(meth)acrylat modifiziert mit Propionsäure, Dipentaerythritol-hexa(meth)acrylat, Dipentaerythritol-hexa(meth)acrylat modifiziert mit Caprolactam, (Meth)acrylatestern, monofunktionelle (Meth)acrylat, wie etwa Methyl(meth)acrylat, Ethyl(meth)acrylat, Isopropyl(meth)acrylat, 2-Ethylhexyl(meth)acrylat, Butyl(meth)acrylat, Cyclohexyl(meth)acrylat, Tetrahydrofurfuryl(meth)acrylat, 2-Hydroxyethyl(meth)acrylat, 2-Hydroxypropyl(meth)acrylat, Polyethylenglykol-mono(meth)acrylat, Methoxypolyethylenglykol-mono(meth)acrylat, Polypropylenglykol-mono(meth)acrylat, Polyethylenglykol-polypropylenglykol-mono(meth)acrylat, Polyethylenglykol-polytetramethylenglykol-mono(meth)acrylat und Glycidyl(meth)acrylat; difunktionelle (Meth)acrylate, wie etwa Ethylenglykol-di(meth)acrylat, Diethylenglykol-di(meth)acrylat, Triethylenglykol-di(meth)acrylat, Tetraethylenglykol-di(meth)acrylat, Polyethylenglykol-di(meth)acrylat, Polypropylenglykol-di(meth)acrylat, Neopentylglykol-di(meth)acrylat, Allyl(meth)acrylat, Bisphenol-Adi(meth)acrylat, Ethylenoxid-modifiziertes Bisphenol-A--di(meth)acrylat, Polyethylenoxid-modifiziertes Bisphenol-A--di(meth)acrylat, Ethylenoxid-modifiziertes Bisphenol-S--di(meth)acrylat, Bisphenol-S--di(meth)acrylat, 1,4-Butandiol-di(meth)acrylat und 1,3-Butylenglykol--di(meth)acrylat; und tri- und höherfunktionelle (Meth)acrylate, wie etwa Trimethylolpropan-tri(meth)acrylat, Glycerin-tri(meth)acrylat, Pentaerythrit-tri(meth)acrylat, Pentraerythrit-tetra(meth)acrylat, Ethylen-modifiertes Trimethylolpropan-tri(meth)acrylat, Dipentaerythrit-hexa(meth)acrylat, 2-Hydroxyethyl(meth)acrylat, 2-Hydroxypropyl(meth)acrylat, Isobutyl-(meth)acrylat, t-Butyl(meth)acrylat, 2-Ethylhexyl(meth)acrylat, Stearylacrylat, 2-Ethylhexylcarbitolacrylat, omega-Carboxypolycaprolactammonoacrylat, Acryloyloxyethylische Säure, Acrylsäuredimer, Lauryl(meth)acrylat, 2-Methoxyethylacrylat, Butoxyethylacrylat, Ethoxyethoxyethylacrylat, Methoxytriethylenglycol-acrylat, Methoxypolyethylenglycolacrylat, Stearyl(meth)acrylat, Cyclohexyl-(meth)acrylat, Tetrahydrofurfuryl(meth)acrylat, N-Vinyl-2-pyrrolidon, Isobornyl(meth)acrylat, Dicyclopentenylacrylat, Benzyl-acrylat, Phenylglycidyletherepoxyacrylat, Phenoxyethyl(meth)acrylat, Phenoxy(poly)ethylenglycolacrylat, Nonylphenol-ethoxyliertes-acrylat, Acryloyloxyethylphthalsäure, Tribromphenylacrylat, Tribromphenol-ethoxyliertes-(meth)acrylat, Methylmethacrylat, Tribromphenyl-methacrylat, Methacryloxyethylische Säure, Methacryloyloxyethyl-maleinsäure, Methacryloyloxyethyl-hexahydrophthalsäure, Methacryloyloxyethylphthalsäure, Polyethylen-glycol(meth)acrylat, Polypropylenglycol(meth)acrylat, beta-Carboxyethylacrylat, N-Methylolacrylamid, N-Methoxymethylacrylamid, N-Ethoxymethylacrylamid, N-n-Butoxymethylacrylamid, t-Butylacrylamidsulfonsäure, Vinylstearat, N-Methylacrylamid, N-Dimethylacrylamid, N-Dimethylaminoethyl-(meth)acrylat, N-Dimethylaminopropylacrylamid, Acryloylmorpholin, Glycidylmethacrylat, n-Butylmethacrylat, Ethylmethacrylat, Allylmethacrylat, Cetylmethacrylat, Pentadecylmethacrylat, Methoxypolyethylen-glycol(meth)acrylat, Diethylaminoethyl(meth)acrylat, Methacryloyloxyethylbernsteinsäure, Hexanediol-diacrylat, Neopentylglycol-diacrylat, Triethyleneglycol-diacrylat, Polyethylenglycol-diacrylat, Polypropylen-glycol-diacrylat, Pentaerythritol-diacrylatmonostearat, Glycol-diacrylat, 2-Hydroxyethylmethacryloylphosphat, Bisphenol-A-Ethylenglycol-Addukt-acrylat, Bisphenol-F-Ethylenglycol-Addukt-acrylat, Tricyclo-decanmethanoldiacrylat, Trishydroxyethylisocyanurat-diacrylat, 2-Hydroxy-1-acryloxy-3-methacryloxypropan, Trimethylolpropan-triacrylat, Trimethylolpropan-Ethylenglycol-Addukt--triacrylat, Trimethylolpropan-Propylenglycol-Addukttriacrylat, Pentaerythritol-triacrylat, Trisacryloyloxyethylphosphat, Trishydroxyethylisocyanurat-triacrylat, modifiziertes epsilon-Caprolactamtriacrylat, Trimethylol-propanethoxy-triacrylat, Glycerol-Propylenglycol-Addukt--triacrylat, Pentaerythritoltetraacrylat, Pentaerythritol-Ethylenglycol-Addukt-tetraacrylat, Ditrimethylolpropantetraacrylat, Dipentaerythritol-hexa(penta)acrylat, Dipentaerythritolmonohydroxypentaacrylat, Urethanacrylat, Epoxyacrylat, Polyesteracrylat, ungesättiges Polyesteracrylat.

Weiter kann der Photoinitiator vorzugsweise ausgewählt sein aus der Gruppe Benzoin, Benzoinmethylether, Benzoinethylether, Benzoinisopropylether, Benzoin-n-butylether, Benzoinisobutylether, Acetophenon, Dimethylaminoacetophenon, 2,2-Dimethoxy-2-phenylacetophenon, 2,2-Diethoxy-2-phenylacetophenon, 2-Hydroxy-2-methyl-1-phenylpropan-1-on, 1-Hydroxycyclohexylphenylketon, 2-Methyl-1-[4-(methylthio)phenyl]-2-morpholinopropan-1-on, 4-(2-Hydroxyethoxy)phenyl-2-hydroxy-2-propylketon, Benzophenon, p-Phenylbenzophenon, 4,4'-Diethylaminobenzophenon, Dichlor-benzophenon, 2-Methylanthrachinon, 2-Ethylanthrachinon, 2-tert-Butylanthrachinon, 2-Aminoanthrachinon, 2-Methylthioxanthon, 2-Ethylthioxanthon, 2-Chlorthioxanthon, 2,4-Dimethylthioxanthon, 2,4-Diethylthioxanthon, Benzyldimethylketal, Acetophenondimethylketal und p-Dimethylaminbenzoat.

Die Menge an transparentem, leitfähigem Oxid Infrarotabsorber, liegt zwischen 0,005 Gew.% und 4 Gew.% der Gießharzmasse, wobei noch geringere Mengen kaum noch zu signifikanten Verbesserungen der Aushärtezeit beitragen, während bei höheren Konzentrationen typisch keine weiteren Vorteile auftreten, entsprechende Schichtdicken vorausgesetzt, und überdies nicht ausgeschlossen werden kann, dass die Gesamtbeständigkeit der Verbundscheibe oder anderen Systems nicht in gleichem Maße oder zumindest nahezu gleichem Maße wie ohne Beimischung gegeben bleibt.

Gerade für sehr geringe Konzentrationen ist es aber überraschend, dass eine signifikante Verkürzung der Prozesszeiten erzielbar ist, die zu einer Gesamtkostenreduktion führt. Dies kann bereits dann der Fall sein, wenn eine so geringe Menge Absorber zugesetzt wird, dass sich im Fertigprodukt keine wesentlichen Eigenschaftsänderungen allein aufgrund von dessen Vorhandensein ergeben. Es ist darauf hinzuweisen, dass der IR-Energiefluss aus herkömmlichen UV-Lampen aber wesentlich höher als etwa bei üblichem Tageslicht ist, so dass sich, obwohl die Absorption von IR bei Sonneneinstrahlung gering ist, dennoch gute Ergebnisse erzielen lassen. Die tatsächliche Gesamtkonzentration kann dabei überdies abhängig von der Gesamt schichtdicke gewählt werden, und zwar auch im Hinblick auf eine später benötigte oder gewünschte Wärmeabsorption beziehungsweise der Strahlungsabsorption und/oder elektrostatische Eigenschaften der fertigen Verbundscheibe.

Die vorliegende Erfindung ermöglicht auch eine entsprechend ausgerüstete Verbundscheibe selbst, sowie ein ausgerüstetes Gießharz, insbesondere ein transparentes und flüssiges Gießharz, insbesondere auf Acrylatbeziehungsweise Acrylbasis, das insbesondere aus einem Gemisch aus Acrylharz, Acrylsäure und Methylmethacrylat bestehen kann (beispielsweise UVEKOL S 20 der Firma Surface Specialties S.A./N.V., Drogenbos, NL). In diesem Gemisch liegt der Anteil von Acrylharz vorzugsweise in einem Bereich von 50 bis 70 Gew.%, der Anteil von Methacrylmethacrylat vorzugsweise in einem Bereich von 20 bis 40 Gew.%, der Anteil von Acrylsäure vorzugsweise in einem Bereich von 10 bis 20 Gew.% und/oder der Anteil von 2-Hdroxyethylacrylat in einem Bereich von 0,1 bis 5 Gew.%. Gesondert Schutz wird auch begehrt für Gießharze und andere UV-aushärtbare Massen, bei denen ein Absorbergehalt insbesondere auf solcher Basis, insbesondere ITO-Gehalt und/oder ATO-Gehalt von unter 0,4 %, insbesondere unter 0,2 % besteht. Es sind mit der Erfindung Gießharze oder andere UV-umsetzbare Systeme realisierbar, die nicht der Verbundscheibenherstellung dienen, aber Vorteile, etwa aufgrund der sehr schnellen Umsetzbarkeit mit UV-Licht ohne Zugabe von IR-Eigenschaften des Endproduktes oder dergleichen beeinflussenden TCO-Mengen, bieten.

Die Erfindung wird im Folgenden anhand eines Beispiels unter Bezugnahme auf die Figuren beschrieben. In dieser ist gezeigt durch
- Fig. 1: Messkurven für Reflexion, Absorption und Transmission (ITO-Schichten aus nano-ITO)
- Fig. 2: die Transmission durch verschiedene Schichtdicken von Gießharz bei unterschiedlichen Schichtdicken
- Fig. 3: die Transmission durch eine 1 mm dicke Gießharzschicht bei unterschiedlichen Gehalten an Indiumzinnoxid-IR-Absorber.

### Vergleichsbeispiel:

Zwei Scheiben aus anorganischem Flachglas werden in einem Abstand von 1 mm voneinander fixiert und an den Kanten abgedichtet. Dann wird ein Gießharz aus einer herkömmlichen Mischung aus Acrylharz, Acrylsäure und Methylmethacrylat UVEKOL S 20 der Firma Surface Specialties S.A. in den Spalt eingegossen. Das Einfüllloch wird verklebt. Nun wird die Anordnung einem UV-Licht ausgesetzt, das von einer breitbandigen UV-Energiequelle erzeugt wird, vorliegend einer UV-Aushärteeinheit der Firma Beltron. Es wird ermittelt, wie viel Durchläufe einer Bestrahlung mit einer Energie von 5000 mJ/cm² bis zur vollständigen Aushärtung erforderlich sind. Es wird festgestellt, dass acht Durchläufe nötig sind.

### Ausführungsbeispiel 1:

Es werden wieder zwei Glasscheiben in zuvor beschriebenen Abstand angeordnet und an den Kanten abgedichtet. In das Gießharz wie zuvor verwendetet werden nun 0,1 Gew.% ITO eingearbeitet, bevor das flüssige Gießharz zwischen die Scheiben gegossen wird. Bei der entsprechenden Bestrahlung mit Durchläufen von wiederum jeweils 5000 mJ/cm² in der UV-Aushärteeinheit sind nur vier Durchläufe für die vollständige Aushärtung erforderlich.

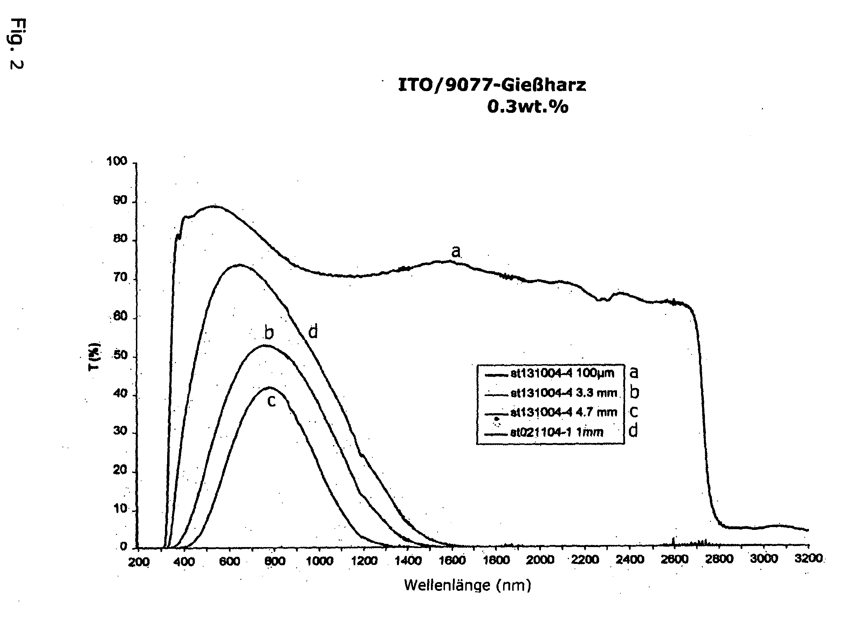

Es werden dann für unterschiedliche Schichtdicken und ITO-Gehalte Transmissions- und Absorptionskurven der fertigen Verbundmasse aufgenommen. Für unterschiedliche Dicken von 100 µm, 4,7 mm und 1 mm sind die Ergebnisse in Figur 2 für unterschiedliche Wellenlängen gezeigt. Erkennbar ist bei technisch relevanten Schichtdicken die Transmission im Bereich der Wellenlängen über etwa 1500 nm signifikant verringert.

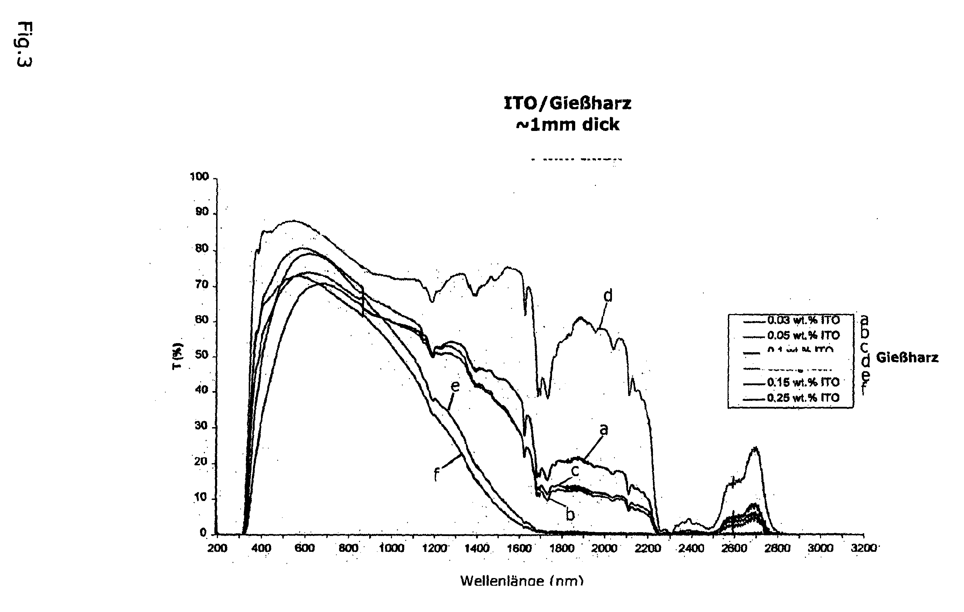

Fig. 3 zeigt den Einfluss unterschiedlicher Indiumzinnoxidgehalte für auf die Transmission, wobei die oberste dargestellte Kurve die Transmission des Gießharzes ohne Infrarotabsorberbeimischung zeigt.

### Ausführungsbeispiel 2:

In ein Gießharz wie in Ausführungsbeispiel 1 wurde 0,1 Gew.% eines nanokristallinen ATO (SnO₂:Sb) eingearbeitet. Die transparente Flüssigkeit wurde zwischen zwei Glasscheiben eingegossen, die, an den Kanten abgedichtet, einen Abstand von 1 mm voneinander hatten (= Spalt). Nach Einfüllen des Harzes wird das Einfüllloch verklebt. Das gleiche wurde mit dem unmodifizierten Harz getan.

Zum Aushärten wurden beide Probekörper durch eine UV-Aushärteeinheit (Fa. Beltron) gefahren; pro Durchlauf wurden die Proben einer Energie von 5000 mJ/cm² ausgesetzt.

Bei dem unmodifizierten Harz waren zum vollständigen Durchhärten 8 Durchläufe nötig. Das ATO enthaltende Harz war nach 5 Durchläufen vollständig ausgehärtet.

### Beispiel:

Als IR-Absorber wird zunächst ein ATO-Pulver wie folgt gekapselt: Ein herkömmliches ATO-Pulver in einer Menge von 100 g wird in 500 ml deionisiertem Wasser vordispergiert. Die Dispersion wird auf eine Temperatur von 75 °C durch Zutropfen einer Ammoniaklösung mit 2 mol NH₃/l ein pH-Wert von 8,5 eingestellt. Dann wird unter starker akustischer Erregung (Ultraschall) der Dispersion eine Lösung mit einem reaktiven Orthosilikat langsam zugetropft, bis nach 90 min Zutropfzeit das Verhältnis von Orthosilikat zu ATO einen Wert von 1 : 4 angenommen hat. Das Zutropfen erfolgt bei konstant bleibender Temperatur und bei durch Zugabe von Salzsäurelösung mit 2 mol HCl/l konstant gehaltenem pH. Nach Beendigung des Zutropfens wird die Flüssigkeit abgekühlt, der erhaltene Feststoff durch Filtrieren abgetrennt, gewaschen und dann für drei Stunden bei 100 °C getrocknet. Die so hergestellte Substanz wird als gekapseltes ATO weiterverwendet.

In ein Gießharz wie in Ausführungsbeispiel 1 wurde dann 0,15 Gew.% dieses nanokristallinen, mit einer glasartigen Verkapselung versehenen ATO (SnO₂:Sb) eingearbeitet; der Anteil der Verkapselung betrug 20 Gew.% der Gesamtmasse des Pulvers. Die resultierende transparente Flüssigkeit wurde zwischen zwei Glasscheiben eingegossen, die, an den Kanten abgedichtet, einen Abstand von 1 mm voneinander hatten (= Spalt). Nach Einfüllen des Harzes wird das Einfüllloch verklebt. Das gleiche wurde mit dem unmodifizierten Harz getan.

Zum Aushärten wurden beide Probekörper durch eine UV-Aushärteeinheit (Fa. Beltron) gefahren; pro Durchlauf wurden die Proben einer Energie von 5000 mJ/cm² ausgesetzt.

Bei dem unmodifizierten Harz waren zum vollständigen Durchhärten 8 Durchläufe nötig. Das das verkapselte ATO enthaltende Harz war nach 5 Durchläufen vollständig ausgehärtet.

Die ausgehärtete Masse verhält sich aufgrund der Verkapselung, insbesondere glasartigen Verkapselung des anorganischen IR-Absorbers, hier nanokristallinem TCO, biologisch genauso wie Massen ohne derartige Zusätze, so dass sie für Lebensmittelzwecke etc. verwendbar ist. Es ist einsichtig, dass hier die Kapselung ungeachtet des tatsächlich verkapselten Materials positiv für die Verwendung im Lebensmittel-, Pharma- oder ähnlichen Bereichen ist und für jedwede UV-umsetzbare Massen die Beifügung gekapselter IR-Absorber zur Härtung bzw. Bestrahlungszeitverkürzung vorteilhaft ist.

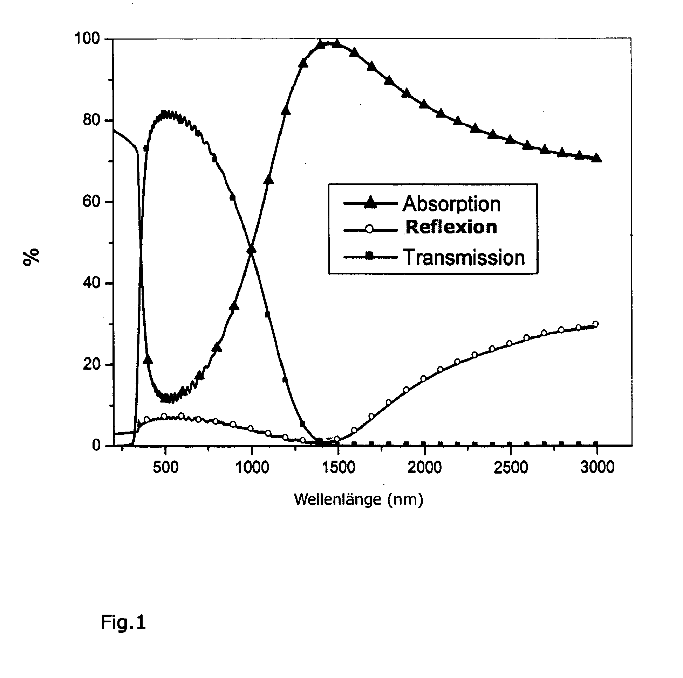

Fig. 1 zeigt als Beispiel dazu Messkurven, die an ITO-Schichten aus nano-ITO aufgenommen wurden. Die Probe ist demnach nur im sichtbaren Wellenlängenberich (VIS) transparent und weist eine sehr geringe Reflektivität auf. Daraus kann die Kurve der Absorption berechnet werden. In diesem konkreten Beispiel wurden 5 g / m² nano-ITO eingesetzt. Dies ist eine wesentlich höhere Menge, als üblichweise eingesetzt wird, nur um das Wirkprinzip deutlicher zu machen. Es wird klar, dass Energie sowohl im UVals auch im IR- Bereich aufgenommen wird und in Wärme umgewandelt werden kann.

Eine Dispersion aus n-ITO (nano-Indiumzinnoxid, Nanogate Advanced Materials GmbH, Saarbrücken) wurde mit einem transparenten, flüssigen Gießharz aus Acrylharz, Acrylsäure und Methylmethacrylat UVEKOL S 20 der Firma Surface Specialties S.A. vermischt. Die Gehalte an ITO lagen bei Konzentrationen kleiner 1 Gew.% bezogen auf die Gesamtmenge im Gesamtmaterial. Ein solches Harz wurde zwischen zwei Glasscheiben gebracht, mit dem Ziel, die Scheiben miteinander transparent zu verkleben (Herstellung von Verbundglasscheiben). Das Aushärten des Harzes erfolgt durch UV-Bestrahlung.

In das angesprochene Gießharz wurde 0,1 Gew.% ITO eingearbeitet. Die transparente Flüssigkeit wurde zwischen zwei Glasscheiben eingegossen, die, an den Kanten abgedichtet, einen Abstand von 1 mm voneinander hatten. Nach Einfüllen des Harzes wurde das Einfüllloch verklebt. Das gleiche wurde mit dem unmodifizierten Harz getan. Zum Aushärten wurden beide Probekörper durch eine UV-Aushärteeinheit (Fa. Beltron) gefahren. Pro Durchlauf wurden die Proben einer Energie von 5000 mJ/cm² ausgesetzt. Bei dem unmodifizierten Harz waren zum vollständigen Durchhärten 8 Durchläufe nötig. Das ITO enthaltende Harz war nach 4 Durchläufen vollständig ausgehärtet.

Fig. 2 zeigt Messkurven von in gleicher Weise hergestellten Verbundglasscheiben, bei denen der Gehalt an n-ITO mit 0,3 Gew.% eingestellt wurde und die Schichtdicke der Harzschicht zwischen 0,1 bis 4,7 mm variiert wurde. Die jeweils im Diagramm höher gelegenen Kurven entsprechen einer dünneren Schichtdicke. So entspricht beispielsweise die ganz oben verlaufende Kurve einer Schichtdicke von 0,1 mm.

Fig. 3 zeigt Messkurven von in gleicher Weise hergestellten Verbundglasscheiben, bei denen der Gehalt an n-ITO zwischen 0 bis 0,25 Gew. % variiert wurde und die Schichtdicke der Harzschicht bei 1 mm lag. Die ganz oben verlaufende Kurve entspricht der Probe mit reinem Harz ohne n-ITO. Die übrigen Kurven entsprechen den verschiendenen Gehalten an n-ITO, wobei die tiefer verlaufenden Kurven jeweils einem höheren Gehalt an n-ITO entsprechen.

## Patentansprüche

1. Verwendung eines **transparenten, leitfähigen Oxids in einer Menge von zwischen 0,005 und 5 Gew.-%** (Infrarot-Absorber) zur Beschleunigung der UV-Aushärtung einer auszuhärtenden Masse **eines Gießharzes auf Acryl- und/oder Acrylatbasis.**

2. Verwendung gemäß Anspruch 1, **dadurch gekennzeichnet, dass** man als den Infrarot-Absorber auswählt aus ATO, ITO, ZnO, LaB₆ und einer Mischung dieser Substanzen.

3. Verwendung gemäß **Anspruch 1 oder 2**, **dadurch gekennzeichnet, dass** man den Infrarot-Absorber in der Gießharzmasse in einer Menge von unter 0,2 Gew.% einsetzt.

4. Verwendung gemäß einem der Ansprüche 1 bis **3**, **dadurch gekennzeichnet, dass** man wenigstens einen anorganischen UV-Absorber und wenigstens einen organischen oder anorganischen Infrarot-Absorber einsetzt.

## Claims

1. Use of a transparent conductive oxide in an amount of from 0.005 to 5% by weight (infrared absorber) for accelerating the UV curing of a composition to be cured of an acrylic- and/or acrylate-based casting resin.

2. The use according to claim 1, **characterized in that** said infrared absorber is selected from ATO, ITO, ZnO, LaB₆ and a mixture of these substances.

3. The use according to claim 1 or 2, **characterized in that** said infrared absorber is employed in the casting resin composition in an amount of less than 0.2% by weight.

4. The use according to any of claims 1 to 3, **characterized in that** at least one inorganic UV absorber and at least one organic or inorganic infrared absorber are employed.

## Revendications

1. Utilisation d'un oxyde conducteur transparent dans une quantité comprise entre 0,005 et 5 % en poids (absorbeur d'infrarouge) pour accélérer le durcissement par UV d'une composition à durcir d'une résine de coulée à base de résine acrylique et/ou d'acrylate.

2. Utilisation selon la revendication 1, **caractérisée en ce que** ledit absorbeur d'infrarouge est choisi parmi ATO, ITO, ZnO, LaB₆ et un mélange de ces substances.

3. Utilisation selon la revendication 1 ou 2, **caractérisée en ce que** ledit absorbeur d'infrarouge est utilisé dans la composition de résine de coulée dans une quantité de moins de 0,2 % en poids.

4. Utilisation selon l'une quelconque des revendications 1 à 3, **caractérisée en ce qu'**au moins un absorbeur d'UV inorganique et au moins un absorbeur d'infrarouge organique ou inorganique sont utilisés.
